# EUROPEAN PATENT APPLICATION

(11) **EP 2 133 700 A1**
(43) Date of publication of application: **16.12.2009**
(21) Application number: 09251550.1
(22) Date of filing: 12.06.2009
(51) Int. Cl.: G01P 15/03, A42B 3/04, A42B 3/06, G01P 15/18

(54) **Sensor device & helmet incorporating same**

(30) Priority: 12.06.2008 GB 0810705
(71) Applicant: Aspray, Matthew, Cirencester GL7 1AG (GB)
(72) Inventor: Aspray, Matthew, Cirencester GL7 1AG (GB)
(74) Representative: Bailey, Richard Alan

(57) **Abstract**

An impact sensor comprises a support 26, a first inertial weight 38, and a first retainer 32 holding the weight 38 against movement relative to the support 26, the retainer 32 being movable relative to the support 26 to permit release the weight 38 for movement relative to the support 26 in the event that the support 26 is subject to an acceleration/deceleration of magnitude greater than a predetermined level.

## Description

This invention relates to a sensor device and to a helmet incorporating such a device.

Safety helmets, for example as worn when horse riding, cycling, skiing, riding a motorcycle, or the like, are in common usage and typically comprise an outer skin and an inner, compressible layer or series of compressible components. In use, if the wearer of the helmet is involved in an incident which would otherwise result in an impact to the wearers head, at least part of the impact force is absorbed by compression of at least part of the compressible layer or one or more of the compressible components. The material of the compressible layer or compressible components is usually of non-resilient form, with the result that the compression thereof is permanent. The permanent compression means that the helmet will be less able to absorb a future impact, and thus may no longer be suitable for use.

Often the outer skin is not significantly damaged by such incidents, and it is not easy to tell simply by visual inspection whether or not a helmet has been involved in an incident sufficient to reduce the shock absorbing capability thereof. There is therefore a risk of individuals continuing to use helmets which are no longer capable of providing the required degree of protection. Where a helmet is only ever used by a single individual, then the individual has some idea of the number of impacts the helmet has been subject to. However, the individual may still be unable to gauge the magnitude of severity of the impacts, and so may not be able to accurately judge whether or not the helmet is still capable of providing protection. Where helmets are used by a number of different individuals, then the ability of a user to determine whether or not a helmet is capable of providing the required degree of protection is severely reduced.

It is an object of the invention to provide a sensor suitable for use with a helmet to provide an indication as to whether or not a helmet has been subject to a large impact, and a helmet incorporating such a sensor.

According to one aspect of the invention there is provided an impact sensor comprising a support, a first inertial weight, and a first retainer holding the weight against movement relative to the support, the retainer being movable relative to the support to permit release the weight for movement relative to the support in the event that the support is subject to an acceleration/deceleration of magnitude greater than a predetermined level.

Preferably, the weight, once released from the retainer, is unable to return to a position in which the retainer holds the weight against movement relative the support.

In such an arrangement, if the sensor is mounted upon a helmet and the helmet is involved in a large impact, rapid acceleration or deceleration of the helmet will be transmitted to the support, but the inertia of the weight will urge the weight to continue to move, deflecting or moving the retainer to release the weight, depending upon the direction of the applied acceleration or deceleration. The release of the weight will result in the sensor rattling, if shaken, providing an audible warning that the sensor and helmet have been involved in an impact.

Preferably, the support further includes an additional retainer and additional inertial weight arranged to be sensitive to accelerations/decelerations in a direction different to, preferably perpendicular to, that of the first retainer and first weight.

The retainer preferably comprises a resiliently deflectable arm. The arm may be formed integrally with the support. The support may be located within, or form at least part of a casing of the sensor.

The invention further relates to a helmet incorporating a sensor of the type defined hereinbefore.

Preferably the helmet incorporates a plurality of such sensors, the sensors preferably being arranged to be sensitive to impacts in different directions. Preferably, sensors are provided to permit sensing of impacts in the front-rear direction, sideways direction and vertical direction of the helmet, in use.

The invention will further be described, by way of example, with reference to the accompanying drawings, in which:
Figure 1 is a diagrammatic view of a helmet, with part broken away, in accordance with one embodiment of the invention;
Figures 2a and 2b are an views illustrating the components of a sensor of the helmet of Figure 1; and
Figure 3 is a view to an enlarged scale illustrating part of the sensor.

Referring to the accompanying drawings there is illustrated a helmet 10 intended for use by an individual whilst skiing, horse riding, cycling, motorcycling or the like. The helmet 10 comprises a layer 12 of a compressible, shock absorbing material. A number of materials are suitable for use in the layer 12 as would be understood by a man skilled in the art and so further description thereof is not included herein. Likewise, although in the illustrated embodiment the layer 12 is a continuous layer, it will be understood that it could take the form of a plurality of individual, discrete components.

The layer 12 is of generally hollow hemispherical shape, and the interior thereof is conveniently provided with fittings (not shown) to allow the helmet 10 to be positioned over and around a portion of a users head, the fittings ensuring that the helmet 10 is firmly secured in position, in use.

Over the layer 12 is formed a skin 14. The skin 14 may take a range of forms. For example, it may comprise a simple fabric cover. Alternatively, it may comprise, for example, a plastics material molding secured over the layer 12 and providing a degree of protection thereto.

Helmets 10 of this general type are well known and are in widespread use. In use, in the event that the user in involved in an incident that would otherwise result in the user sustaining an impact to the head, the impact is sustained to the helmet 10 and the layer 12 compresses, absorbing at least part of the impact load, thus reducing the risk of injury, or reducing the extent of injury, to the user.

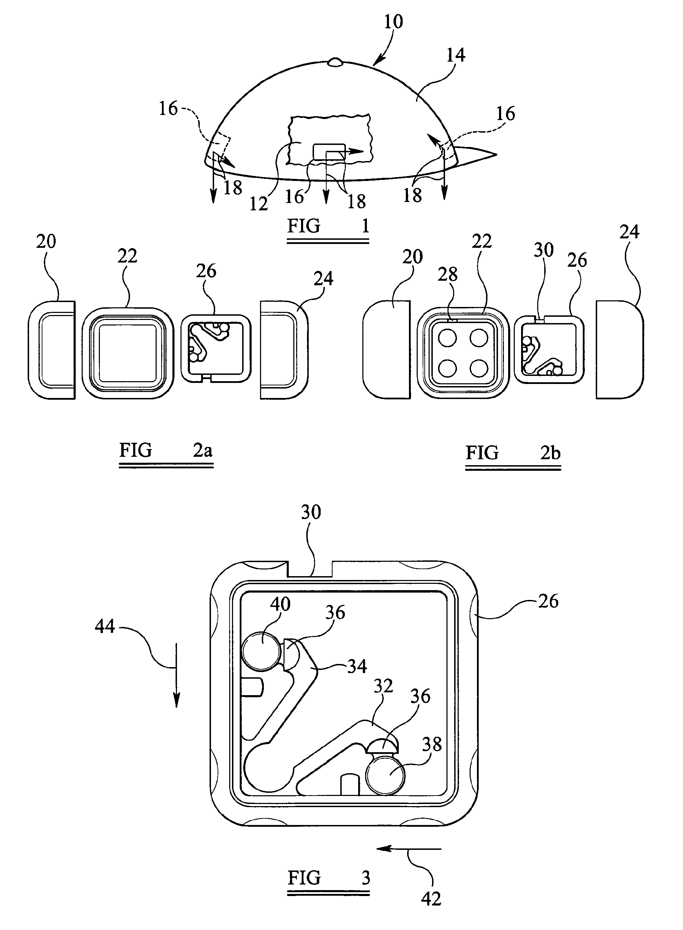

In accordance with the invention, secured to the helmet 10 is a plurality of sensors 16. The sensors 16 may simply be adhered or otherwise secured to the skin 14. Alternatively, as illustrated, they may be hidden from view, being located between the layer 12 and the skin 14. In the arrangement illustrated, four such sensors 16 are mounted upon the helmet 10, the sensors 16 being spaced apart around the periphery of the helmet 10. As described below, each sensor 16 is sensitive to impacts in two perpendicular directions, and the orientation of the sensors 16 is preferably such that, together, the sensors 16 are sensitive to impacts in any direction, ie together the sensors 16 form a tri-axial impact sensor. The arrows 18 in Figure 1 illustrate the directions in which each of the sensors 16 are sensitive to impacts. It will be appreciated that none of the sensors 16 are arranged to be sensitive to impacts in the upward direction in the arrangement of Figure 1. This is because it is very unusual for such impacts to result in permanent compression of the layer 12. However, if it is desired to provide a sensor arrangement sensitive to impacts in this direction, this can be achieved simply by inverting one or more of the sensors 16.

Referring to Figures 2 and 3, each sensor 16 comprises a multi-part casing made up of casing components 20, 22, 24 which can be secured to one another to form a hollow casing of generally square cross section. Within the casing is located a support 26 of generally square cross section. The dimensions of the support 26 are such that it is an interference fit within the case, thus little if any relative movement therebetween occurs, in use. A locating projection 28 is formed on the casing part 22 and arranged to be received within a corresponding recess 30 formed in the support 26 to ensure correct location of the support 26 within the casing, in use.

The support 26 includes a first resilient retainer in the form of an inwardly extending arm 32 formed integrally with the support 26. A similar arm 34 forms a second resilient retainer. Each arm 32, 34 includes, at its free end, an abutment 36 formed with a recess, the recess facing an adjacent, recessed part of the support 26. Inertial weights 38, 40 in the form of ball bearings are held between the abutments 36 and adjacent parts of the support 26, the weights 38, 40 being received, partially, within the corresponding recesses.

In use, if the sensor 16 is subject to a sudden acceleration or deceleration, the weights 38, 40 will experience forces urging them to move relative to the support 26. If the applied force has a component of the forces acting in direction 42 illustrated in Figure 3 which is larger than a predetermined magnitude, the force will be sufficient to cause the weight 38 to ride out of the associated recesses, forcing the arm 32 to deflect inwardly, until a point is reached beyond which the weight 38 is able to move freely within the casing. Likewise, if the applied force has a component acting in the direction 44 greater than a predetermined magnitude, the weight 40 will be released for movement. In either case, the sensor 16 will rattle, if shaken, as the respective weights 38, 40 are free to move within the casing, no longer being retained against movement by the arms 32, 34, providing an audible warning that the helmet 10 has been subject to a relatively large impact, and so may no longer be suitable for use.

A user, before putting on the helmet, simply needs to shake the helmet to determine whether or not one or more of the sensors rattles. If a rattling sound is heard, this provides an indication that the helmet may have been subject to a shock sufficient to impair the shock absorbing capability thereof. The user can then either decide to use an alternative helmet, or more carefully inspect the helmet in order to determine whether or not it is still suitable for use. In either case, as the risk of continued use of a helmet which no longer affords the required degree of protection is provided, it will be appreciated that safety is enhanced.

Although in the arrangement illustrated each sensor 16 is sensitive to impacts in two perpendicular directions, it will be appreciated that this need not always be the case. For example, the sensor may only be sensitive in one direction, or in more than two directions. Further, the said directions need not be perpendicular to one another.

A number of other modifications and alterations may be made to the arrangement described hereinbefore without departing from the scope of the invention.

## Claims

1. An impact sensor comprising a support (26), a first inertial weight (38), and a first retainer (32) holding the weight (38) against movement relative to the support (26), the retainer (32) being movable relative to the support (26) to permit release the weight (38) for movement relative to the support (26) in the event that the support (26) is subject to an acceleration/deceleration of magnitude greater than a predetermined level.

2. A sensor according to Claim 1, wherein the weight (38), once released from the retainer (32), is unable to return to a position in which the retainer (32) holds the weight (38) against movement relative the support (26).

3. A sensor according to Claim 1 or Claim 2, wherein the support (26) further includes an additional retainer (34) and additional inertial weight (40) arranged to be sensitive to accelerations/decelerations in a direction different to that of the first retainer (32) and first weight (38).

4. A sensor according to Claim 3 wherein the additional retainer (34) and additional inertial weight (40) are arranged to be sensitive to accelerations/decelerations in a direction perpendicular to that of the first retainer (32) and first weight (38).

5. A sensor according to any of the preceding claims, wherein the retainer (32) comprises a resiliently deflectable arm.

6. A sensor according to Claim 5, wherein the arm is formed integrally with the support (26).

7. A sensor according to any of the preceding claims, wherein the support (26) is located within, or forms at least part of, a casing of the sensor.

8. A sensor substantially as hereinbefore described with reference to the accompanying drawings.

9. A helmet incorporating a sensor (16) as claimed in any of the preceding claims.

10. A helmet according to Claim 9, and incorporating a plurality of such sensors (16)..

11. A helmet according to Claim 10, wherein the sensors (16) are arranged to be sensitive to impacts in different directions.

12. A helmet according to Claim 10 or Claim 11, wherein the sensors (16) are arranged to permit sensing of impacts in the front-rear direction, sideways direction and vertical direction of the helmet, in use.
